# EUROPÄISCHE PATENTSCHRIFT

(11) **EP 0 617 881 B1**
(45) Veröffentlichungstag und Bekanntmachung des Hinweises auf die Patenterteilung: **13.08.1997**
(21) Anmeldenummer: 94104712.8
(22) Anmeldetag: 24.03.1994
(51) Int. Cl.: A01B 63/14

(54) **Vorrichtung zum Verbinden eines Gerätes mit einem ziehenden Fahrzeug**
Tractor implement connection device
Dispositif de raccordement d'un outil à un tracteur

(30) Priorität: 29.03.1993 US 38316
(43) Veröffentlichungstag der Anmeldung: 05.10.1994
(73) Patentinhaber: DEERE & COMPANY, Moline, Illinois 61265 (US)
(72) Erfinder: Foley, Daniel Michael, Geneseo, Illinois 61254 (US); Snyder, Michael Duane, Bettendorf, Iowa 52722 (US)
(74) Vertreter: Feldmann, Bernhard

(56) Entgegenhaltungen:
- EP-A- 0 567 960
- FR-A- 2 343 412
- GB-A- 2 161 691
- US-A- 2 627 796
- US-A- 3 233 682
- US-A- 3 463 510
- US-A- 5 046 311

## Beschreibung

Die Erfindung bezieht sich auf eine Vorrichtung gemäß Oberbegriff des Anspruchs 1. Eine solche Vorrichtung ist aus US-A-3 233 682 bekannt.

Eine ähnliche Vorrichtung (US-A-3 463 510) dient gleichzeitig zum Übertragen eines Teils des Gerätegewichts auf das ziehende Fahrzeug, das als Ackerschlepper ausgebildet ist. Hierdurch wird die Zugkraft des Ackerschleppers verbessert. Der Ackerschlepper ist mit zwei unteren Lenkern und einem oberen Lenker ausgerüstet, die über einen sogenannten Schnellkupplungsrahmen miteinander verbunden sind. Der Kolbenzylinder ist bei einer Ausführungsart zwischen die Deichsel und dem oberen Steg des Kupplungsrahmens geschaltet und bewirkt eine Kraftübertragung, wenn das von Hand verstellbare Steuerventil derart eingestellt ist, daß es mit der schlepperseitigen Pumpe verbunden ist. Bei dieser bekannten Vorrichtung muß das ziehende Fahrzeug mit einem hochstehenden Kupplungsrahmen versehen sein, was nur möglich ist, wenn das ziehende Fahrzeug mit einem Dreipunktgerätegestänge ausgerüstet ist. Im übrigen liegt infolge des weit hinter dem Schlepperheck vorgesehenen Schnellkupplungsrahmen der Kraftangriffspunkt weit hinter den Hinterrädern, so daß die Vorderachse des ziehenden Fahrzeuges gegebenenfalls zu stark entlastet wird und das ziehende Fahrzeug zum Aufbäumen neigt.

Für einen an einen Traktor anhängbaren Pflug ist bereits ein doppelseitig beaufschlagbarer Hydraulikzylinder zur Gewichtsverlagerung vorgeschlagen worden (US-A-3 233 682), der zu zwei weiteren am Traktor angeordneten Zylindern parallel geschaltet ist, über die zur Verstärkung der Zugkraft die Hinterräder des Traktors belastet werden können. Der doppelseitig beaufschlagbare Hydraulikzylinder ist an seinem einen Ende an eine Zugdeichsel und an seinem anderen Ende an einen höher gelegenen und am Pflugrahmen angebrachten Träger anschließbar, der hierzu mehrere in einer Horizontalebene liegende Anschlußstellen aufweist. Alle drei Zylinder werden über eine herkömmliche am Traktor vorgesehene hydraulische Kraftanlage beaufschlagt, wie sie aus dem Dokument US-A-2 627 796 bekannt ist.

Die Erfindung sieht deshalb die kennzeichnenden Merkmale des Anspruchs 1 von. Auf diese Weise kann die Gewichtsübertragung zunächst ohne den Kupplungsrahmen am ziehenden Fahrzeug eingesetzt werden, und das Steuerventil braucht nicht von Hand in eine Stellung gebracht zu werden, damit eine Gewichtsverlagerung stattfinden kann. Während des Einsatzes bleibt die Gewichtsübertragung konstant und auch dann, wenn das Ventil die Verbindung zur Druckquelle unterbricht, bleibt der Druck am Kolbenzylinder erhalten. Schließlich ergibt sich der weitere Vorteil, daß bei einem geschlossenen Hydrauliksystem, also einem System, bei dem die Pumpe in Ruhestellung geht, solange kein Drucköl zur Durchführung einer Funktion benötigt wird und das bei modernen Schleppern hauptsächlich Verwendung findet, der Kolben des Kolbenzylinders unter vollem Betriebsdruck stehen kann, auch wenn sich die Pumpe abgeschaltet hat.

Da es jedoch bei schwierigen Feld- oder Einsatzbedingungen wünschenswert ist, einen höheren Gewichtsanteil auf das ziehende Fahrzeug zu übertragen, kann nach der Erfindung ferner noch vorgesehen werden, daß der vorherbestimmbare Druck wahlweise durch das Steuerventil einstellbar ist.

Im einzelnen kann nach der Erfindung das Steuerventil über eine Eingangsleitung mit dem zur fahrzeugseitigen Druckquelle führenden Leitungsanschluß und über eine Rücklaufleitung mit dem zum fahrzeugseitigen Sammelbehälter führenden Leitungsanschluß verbindbar sein und eine Ausgangsleitung aufweisen, die an den Zylinderraum am geschlossenen Ende des Zylinders angeschlossen ist, wobei das Steuerventil eine erste Stellung, in der die Eingangsleitung mit der Ausgangsleitung verbunden ist, eine zweite Stellung, in der die Ausgangsleitung blockiert ist, und eine dritte Stellung einnehmen kann, in der die Ausgangsleitung mit der Rücklaufleitung verbunden ist, und wobei eine einstellbare Feder vorgesehen ist, die gegen den Pilotdruck in der Ausgangsleitung wirkt und bestrebt ist, das Steuerventil in seine erste Stellung zu verstellen. In der ersten Stellung des Steuerventils kann damit die eine Seite des Kolbenzylinders druckbeaufschlagt werden. Ist der vorherbestimmte Druck erreicht, schließt das Steuerventil sofort. Fällt der Druck am Kolbenzylinder aus irgendeinem Grund ab, dann schiebt die Feder das Verschlußorgan des Steuerventils in die erste Stellung zurück, damit der erforderliche Druck wieder aufgebaut werden kann. Das Abfallen des Druckes kann einmal durch Leckölverluste hervorgerufen werden. Viel häufiger kommt es aber zu einem Druckabfall bei Arbeiten auf unebenem Grund, bei dem das vordere Ende der Deichsel mit Bezug auf das Gerät angehoben oder abgesenkt wird. Im ersten Fall geht dann das Steuerventil in seine erste Stellung zum Neuaufbau des Druckes und im zweiten Fall geht das Ventil in seine dritte Stellung, so daß überschüssiges Öl zum fahrzeugseitigen Sammelbehälter zurückströmen kann, bis daß der vorgegebene Druck wieder erreicht ist und das Ventil wieder schließt. Dies setzt allerdings voraus, daß ein fahrzeugseitiges Ventil offen ist und damit die Verbindungen zur fahrzeugseitigen Pumpe und dem fahrzeugseitigen Sammelbehälter. Damit die Gewichtsübertragung aber auch bei einem geschlossenen fahrzeugseitigen Ventil und unter Druck stehendem Kolbenzylinder voll einsatzbereit bei Arbeiten auf unebenem Gelände bleibt, ist nach der Erfindung außerdem vorgesehen, daß der dem Zylinderraum am geschlossenen Ende des Zylinders gegenüberliegende Druckraum über eine Leitung an die Rücklaufleitung angeschlossen ist, wobei diese Leitung mit der Ausgangsleitung verbunden ist und in dieser Verbindung ein Rückschlagventil derart vorgesehen ist, daß eine Flüssigkeitsverbindung nur von der Leitung zur Ausgangsleitung gestattet ist.

Zweckmäßig greift der Zylinder mit seiner Kolbenstange vertikal oberhalb der Schwenkverbindung an dem Deichselteil an.

Mit dieser Gewichtsübertragungsvorrichtung lassen sich auch besonders große oder ungleichmäßige Belastungen an der gezogenen Einheit eliminieren, was insbesondere dann von Bedeutung ist, wenn mit dem Deichselteil ein zweites Gerät verriegelbar ist, das in der Arbeitsstellung neben dem ersten Gerät und in der Transportstellung hinter dem ersten Gerät läuft, wobei beide Geräte mit Laufrädern versehen sind. Eine solche Gerätekombination ist in unserem älteren Dokument EP-A1-0 567 960 offenbart.

In der Zeichnung ist ein nachfolgend näher erläutertes Ausführungsbeispiel der Erfindung dargestellt. Es zeigt:
- Fig. 1: zwei sich in Arbeitsstellung befindliche Geräte in Form von Sämaschinen in der Draufsicht mit einer einzigen Anschlußvorrichtung zur Verbindung mit einem ziehenden Ackerschlepper und
- Fig. 2: die zur Gewichtsübertragung geeignete Anhängevorrichtung in Seitenansicht mit einem hydraulischen System in schematischer Ansicht zum Steuern der Gewichtsübertragung.

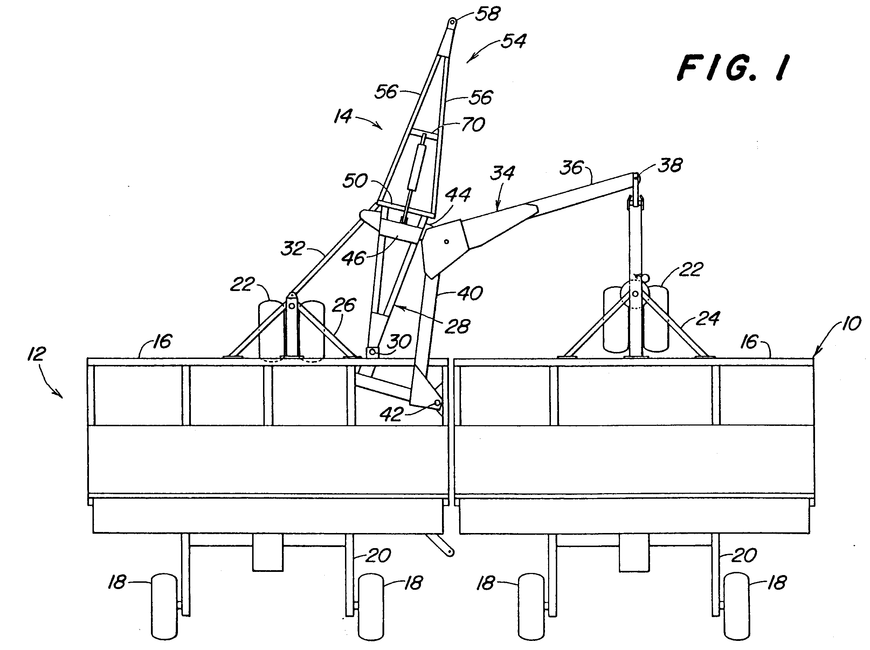

In der Zeichnung ist eine Anhängevorrichtung 14 zum Ziehen eines ersten und eines zweiten Gerätes 10 und 12 erkennbar. Die Geräte können als Sämaschinen ausgebildet sein, die zwischen einer Transport- und einer in Fig.1 gezeigten Arbeitsstellung umsetzbar sind, in der Transportstellung hintereinander und in der Arbeitsstellung nebeneinander laufen.

Die beiden Geräte 10 und 12 werden von einem in der Zeichnung nicht dargestellten Ackerschlepper gezogen, der hierzu mit einer herkömmlichen Zugvorrichtung, beispielweise in Form eines Zugpendels, ausgerüstet ist, an die das vordere Ende der Anhänge-vorrichtung 14 anschließbar ist. Da die beiden Geräte eine beträchtliche Arbeitsbreite aufweisen, benötigt man in der Regel zum Ziehen einen Ackerschlepper der gehobenen Leistungsklasse. Solche Schlepper besitzen ein hydraulisches System mit einer hydraulischen Pumpe, einem zugehörigen Sammelbehälter und wenigstens zwei Sätzen von Hydraulikauslässen an ihrem Heck. Eine sich auf dem Bedienungsstand des Ackerschleppers befindliche Bedienungsperson kann wahlweise einen der Auslässe in jedem Satz mit der hydraulischen Pumpe und den anderen Auslaß in jedem Satz mit dem Sammelbehälter verbinden, wozu hydraulische Steuerventile vorgesehen sind. Derartige Ackerschlepper sind normalerweise mit einem geschlossenen Hydrauliksystem, d. h. einem System, in dem die Pumpe von selbst abschaltet, wenn der erforderliche Betriebsdruck erreicht ist, versehen und haben in der Regel mehr als zwei Sätze Auslässe, obwohl lediglich ein Satz Hydraulikauslässe zum Betreiben einer noch nachfolgend im einzelnen zu beschreibenden Gewichtsübertragungsvorrichtung erforderlich ist.

Bis auf geringe Einzelheiten der Gerätedeichseln sind die beiden Sämaschinen bzw. Geräte 10 und 12 identisch ausgebildet. So weist jede Sämaschine einen im wesentlichen starren Rahmen 16 auf, dessen rückwärtiges Ende von zwei Bodenrädern 18 getragen wird, die über Auslegerarme 20 an den Rahmen angeschlossen sind. Die vorderen Enden der beiden Rahmen stützen sich auf jeweils zwei Pendelrädern 22 ab, wobei die Pendelräder 22 an dem in der Fig. 1 rechts liegenden Gerät 10 an einer Gerätedeichsel 24 und die Pendelräder 22 an dem links liegenden Gerät 12 an einer Gerätedeichsel 26 angeschlossen sind. Die beiden Gerätedeichseln sind unterschiedlich ausgebildet, um das rechte Gerät 10 nach links in eine Transportstellung hinter dem linken Gerät 12 verstellen zu können, wie es im einzelnen in dem Dokument EP-A1-0 567 960 beschrieben ist, auf das Bezug genommen wird. Wie aus Fig. 1 zu erkennen ist, besteht der Hauptunterschied in den beiden Gerätedeichseln darin, daß die linke Gerätedeichsel 24 länger ist als die rechte Gerätedeichsel 26.

Im einzelnen ist die Anhängervorrichtung 14 mit einem im wesentlichen dreieckförmig ausgestatteten rückwärtigen Deichselteil 28 versehen, dessen mit Bezug auf Fig. 1 hinten liegende Spitze über einen vertikal verlaufenden Zapfen 30 mit der Vorderseite des Rahmens 16 des linken Gerätes 12 schwenkbar verbunden ist. Diese Anlenkstelle befindet sich im rechten Endbereich des Gerätes 12, so daß in der in Fig. 1 gezeigten Arbeitsstellung der Deichselteil 28 bzw. die Anhängevorrichtung 14 nach rechts ausgeschwenkt ist, damit ihr vorderes an den Schlepper anschließbares Ende in der Längsmittelebene oder etwa in der Längsmittelebene der beiden Geräte zu liegen kommt. Eine Winkelstrebe 32 erstreckt sich noch zwischen dem vorderen Ende der linken Gerätedeichsel 26 und dem vorderen Ende des rückwärtigen Deichselteils 28.

Das rechte Gerät 10 ist in der Arbeitsstellung an die Anhängevorrichtung 14 über eine Schwingdeichsel 34 anschließbar. Diese besteht aus einem ersten Schenkelteil 36, dessen freies Ende über einen vertikal verlaufenden Zapfen 38 an das vordere Ende der rechten Gerätedeichsel 24 angeschlossen ist, und aus einem zweiten Schenkelteil 40, der sich in der Arbeitsstellung im wesentlichen in Fahrtrichtung erstreckt und an die rechte Seite des linken Rahmens 16 über einen vertikal verlaufenden Zapfen 42 angeschlossen ist. Über eine Verriegelung 44 ist die Schwingdeichsel 34 im Bereich der ellbögigen Verbindungsstelle der beiden Schenkelteile 36 und 40 an das vordere Ende des rückwärtigen Deichselteils 28 in der Arbeitsstellung nach Fig. 1 anschließbar.

Wie es ebenfalls in dem vorgenannten Dokument ausführlich dargestellt ist, wird die Verriegelung 44 für die Transportfahrt entriegelt, wobei bei fahrendem Schlepper die Schwingdeichsel 34 um den Zapfen 42 verschwenkt, um das rechtsseitige Gerät 10 direkt hinter das linksseitige zu verfahren. Die Anhängevorrichtung 14 verschwenkt dabei um den Schwenkzapfen 30 nach links, so daß das frontseitge Ende der Anhängevorrichtung 14 in der Längsmittelebene des linken Gerätes 12 zu liegen kommt.

Es wurde bereits darauf verwiesen, daß der rückwärtige Deichselteil 28 eine dreieckförmige Grundform aufweist. Diese weist im Bereich ihres vorderen Endes einen Querteil 46 auf, von dem sich aus ein Paar geneigter Armteile 48 nach unten und vorne erstrecken, deren untere Enden über einen unteren Querteil 50 miteinander in Verbindung stehen. Unmittelbar vor diesem Querteil 50 ist an dem vorderen Ende des rückwärtigen Deichselteils 28 noch ein sich im wesentlichen quer erstreckender horizontaler Querzapfen 52 angeordnet.

Zu der Anhängevorrichtung 14 gehört ebenfalls noch eine dreieckförmig ausgestaltete Deichsel 54 mit sich gegenüberliegenden Seitenstreben 56, die am vorderen Ende der Anhängevorrichtung 14 zu einem Deichselanschluß 58 zusammenlaufen. Der Deichselanschluß 58 ist in bekannter Art mit einer Schlepperzugstange oder einem Zugpendel derart über einen vertikalen Zapfen verbindbar, daß die Anhängevorrichtung seitliche Schwenkbewegungen ausführen kann und auf die Zugstange eine vertikale Last überträgt.

Ein doppelseitig wirkender hydraulischer Zylinder 60 ist mit seinem kolbenstangenseitigen Ende 62 an den oberen Querteil 46 des rückwärtigen Deichselteils 28 über einen quer verlaufenden Zapfen 64 angeschlossen. Das gegenüberliegende oder geschlossene Zylinderende 66 ist an die Deichsel 54 über einen Querzapfen 68 angeschlossen, der an einem Querteil 70 angeordnet ist, der zwischen den sich gegenüberliegenden Seitenstreben 56 der Deichsel vorgesehen ist.

Der Zylinder 60 ist mit Druck beaufschlagbar, der durch ein einstellbares Drucksteuer- oder Druckregelventil 72 kontrollierbar ist, das die Menge des Druckes von hydraulischer Flüssigkeit, mit der der Zylinder beaufschlagbar ist, steuert. Derartige Steuerventile sind allgemein bekannt und im einschlägigen Handel erhältlich. Das Steuerventil 72 ist mit einer Druckeinlaßleitung 74 versehen, die eine Steckkupplung 76 aufweist, die ihrerseits mit einem der Auslässe in einem Satz hydraulischer Auslässe am Schlepper in bekannter Art verbindbar ist. Das Steuerventil 72 ist ebenfalls noch mit einer Rücklaufleitung 78 mit einer Steckkupplung 80 versehen, die mit dem anderen Auslaß des Satzes hydraulischer Auslässe am Schlepper verbindbar ist. Das Ventil 72 ist ferner noch mit einer Druckauslaßleitung 82 versehen, die zu dem zylinderseitigen oder geschlossenen Ende des Zylinders 60 führt, während der Druckraum an dem kolbenstangenseitigen Ende des Zylinders 60 über eine hydraulische Leitung 84 an die Rücklaufleitung 78 angeschlossen ist. Die Leitungen 82 und 84 sind noch über eine Leitung 86 miteinander verbunden, in der ein Rückschlagventil 88 angeordnet ist, das lediglich einen Flüssigkeitsfluß von der Leitung 84 zu der Leitung 82 zuläßt.

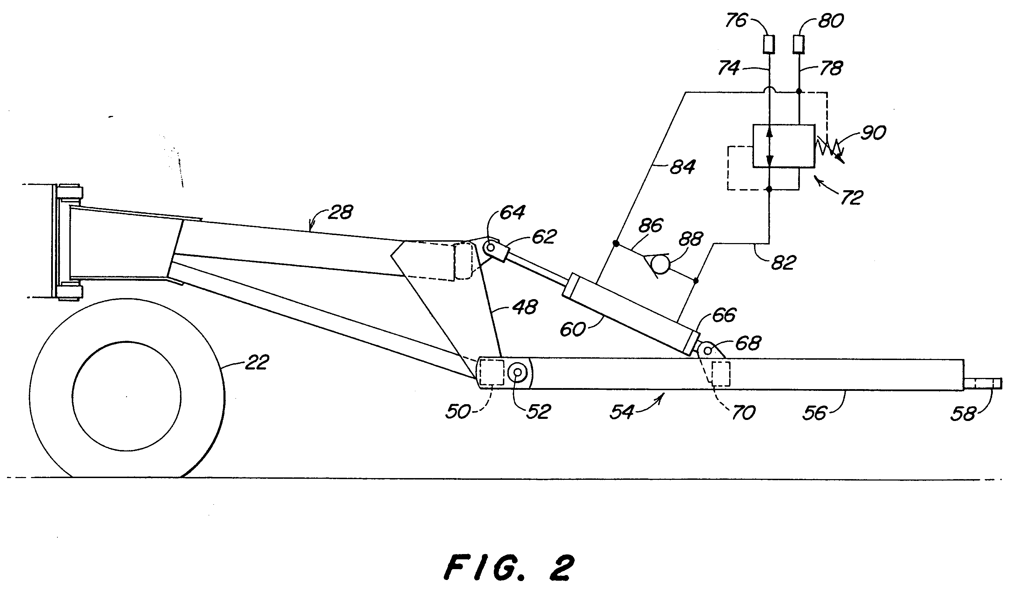

Das Ventil 72 ist noch in bekannter Weise mit einer von Hand einstellbaren Feder 90 ausgerüstet, über die das Verschlußelement des Ventils in die in Fig. 2 gezeigte Offenstellung gedrückt wird, in der die Druckeinlaßleitung 74 mit der Druckauslaßleitung 82 verbunden ist.

Um nun die vorbeschriebene Gewichtsübertragungsvorrichtung einsetzen zu können, betätigt die Bedienungsperson das Steuerventil am Schlepper derart, daß die Druckquelle am Schlepper mit dem Auslaß verbunden ist, der mit der Steckkupplung 76 in Verbindung steht, während die Steckkupplung 80 an eine Rücklaufleitung oder an den Ölsammelbehälter am Schlepper angeschlossen ist. Unter Druck stehende Flüssigkeit gelangt dann in das Ventil 72, und zwar solange bis der Druck in der Leitung 82 größer ist als der Druck der Feder 90, wodurch das Verschlußelement des Ventils 72 in eine geschlossene Stellung (nach rechts in Fig. 2) verstellt wird. Die heutigen modernen Schlepper mit einem geschlossenen Hydrauliksystem haben einen Betriebsdruck von etwa 155 kg/cm² (2200 psi), und die Feder 90 ist derart eingestellt, daß ein erheblich geringerer Druck in die Ventilausgangsleitung 82 und dementsprechend in den Zylinder 60 gelangt. Druck in der Leitung 82 bewirkt ein Ausfahren des Zylinders 60, wodurch eine Kraft zwischen den Zapfen 64 und 68 ausgeübt wird, die dem Druck in dem geschlossenen Ende des Zylinders 60 entspricht. Dieser Druck wiederum resultiert in einem nach unten gerichteten Druck auf die Deichsel 54, so daß ein Teil des Gerätegewichtes auf die Schlepperzugstange übertragen wird. Durch Verstellen der Feder 90 kann die Bedienungsperson die Kraft variieren, die auf den Zylinder 60 einwirkt, und dementsprechend den Gewichtsanteil, der auf die Schlepperzugstange übertragen wird. Das auf die Schlepperzugstange übertragene Gewicht ist Gewicht, das von den Pendelrädern 22 und von den vorderen Enden der Geräterahmen 16 entfernt wird, so daß übergroße Belastungen der Sämaschinenrahmen eliminiert werden können. Andererseits verbessert das auf die Zugstange übertragene Gewicht die Zugkraft des Schleppers, was bei Arbeiten in schwierigen Feldbedingungen von Vorteil sein kann.

Wenn die Geräte auf unebenem Boden eingesetzt werden, kann es vorkommen, daß sich die Schlepperzugstange mit Bezug auf die gezogenen Geräte anhebt oder absenkt. Bei einem Anheben der Zugstange mit Bezug auf das Gerät wird auch das vordere Ende der Deichsel 54 mitangehoben, wodurch der Druck in der Leitung 82 dazu tendiert, über den durch die Feder 90 eingestellten Druck anzusteigen. Als Folge hiervon wird das Verschlußorgan des Ventils 72 sich derart verstellen, daß Druckflüssigkeit aus der Leitung 82 solange in die Leitung 78 gelangt, bis der gewünschte oder vorherbestimmte Druck sich wieder einstellt. Bei einem Absenken der Zugstange mit Bezug auf das Gerät wird das vordere Ende der Deichsel 54 mitabgesenkt und der Druck in der Leitung 82 verringert. Als Folge hiervon verstellt sich das Verschlußorgan des Ventils 72 wieder in seine in Fig. 2 gezeigte Stellung, so daß der Druck in der Leitung 82 wieder ansteigen kann, bis daß der vorherbestimmte Druck wieder erreicht ist. Natürlich setzt dies voraus, daß das Steuerventil am Schlepper derart eingestellt ist, daß die Leitung 74 mit der Hydraulikpumpe am Schlepper und die Leitung 78 mit dem Schleppersammelbehälter verbunden ist. Befindet sich dagegen das Steuerventil am Schlepper in seiner Neutralstellung, in der der Zufluß in die Leitung 74 und der Rückfluß aus der Leitung 78 blockiert ist, dann wird bei einem Absenken des vorderen Deichselendes infolge von unebenem Gelände Druckflüssigkeit aus dem kolbenstangenseitigen Druckraum des Zylinders 60 durch die Leitung 86 und das Rückschlagventil 88 in den zylinderseitigen Druckraum gedrückt, wobei ein "Biegen" der Anhängevorrichtung möglich ist, auch wenn sich das Steuerventil am Schlepper in seiner Neutralstellung befindet. Umgekehrt wird bei einem Anheben des vorderen Endes der Deichsel 54, was dazu tendiert, den Zylinder "zusammen zupressen", der Druck in der Leitung 82 ansteigen, so daß Drucköl durch das Ventil 72 in die Leitung 78 und weiter in die Leitung 84 bis in den Druckraum am anderen Ende des Zylinders 60 gelangt.

## Patentansprüche

1. Vorrichtung mit einer Deichsel (54), einem Deichselteil (28) und einem doppeltwirkenden Kolbenzylinder (60), zum Verbinden mindestens eines Gerätes (10, 12) mit einem ziehenden und eine Zugeinrichtung aufweisenden Fahrzeug, wobei die Deichsel (54) mit ihrem vorderen Ende an die Zugeinrichtung anschließbar und das ziehende Fahrzeug mit wenigstens zwei Leitungsanschlüssen versehen ist, die mit einer fahrzeugseitigen Druckquelle und einem fahrzeugseitigen Sammelbehälter verbunden oder verbindbar und an den doppeltwirkenden und einenends an der Deichsel (54) angreifenden Kolbenzylinder (60) anschließbar sind, wobei die Deichsel (54) mit ihrem rückwärtigen Ende vertikal schwenkbar an den mit dem Gerät (10, 12) verbindbaren Deichselteil (28) über eine Schwenkverbindung angelenkt ist, der doppeltwirkende Zylinder (60) mit seinem anderen Ende an dem Deichselteil (28) und abgesetzt zur Schwenkverbindung angreift, der Zylinder (60) derart an die Leitungsanschlüsse angeschlossen ist, daß bei einem Ausfahren der Kolbenstange auf die Zugeinrichtung eine nach unten gerichtete Kraft ausgeübt wird, und der Zylinderraum am geschlossenen Ende des Zylinders (60) mit dem zur fahrzeugseitigen Druckquelle führenden Leitungsanschluß über eine Verbindung verbindbar ist, dadurch gekennzeichnet, daß die Vorrichtung weiter ein in dieser Verbindung vorgesehenes und diese Verbindung unterbrechend ausgebildetes Steuerventil (72) umfaßt, daß bei Erreichen eines vorherbestimmten Druckes schließt, der niedriger ist als der fahrzeugseitige Systemdruck oder der Betriebsdruck der fahrzeugseitigen Druckquelle.

2. Vorrichtung nach Anspruch 1, dadurch gekennzeichnet, daß der vorherbestimmbare Druck wahlweise einstellbar ist.

3. Vorrichtung nach Anspruch 1 oder 2, dadurch gekennzeichnet, daß das Steuerventil (72) über eine Eingangsleitung (74) mit dem zur fahrzeugseitigen Druckquelle führenden Leitungsanschluß und über eine Rücklaufleitung (78) mit dem zum fahrzeugseitigen Sammelbehälter führenden Leitungsanschluß verbindbar ist und eine Ausgangsleitung (82) aufweist, die an den Zylinderraum am geschlossenen Ende des Zylinders (60) angeschlossen ist.

4. Vorrichtung nach Anspruch 3, dadurch gekennzeichnet, daß das Steuerventil (60) eine erste Stellung, in der die Eingangsleitung (74) mit der Ausgangsleitung (82) verbunden ist, eine zweite Stellung, in der die Ausgangsleitung (82) blockiert ist, und eine dritte Stellung einnehmen kann, in der die Ausgangsleitung (82) mit der Rücklaufleitung (78) verbunden ist, wobei eine einstellbare Feder (90) vorgesehen ist, die gegen den Pilotdruck in der Ausgangsleitung (82) wirkt und bestrebt ist, das Steuerventil (72) in seine erste Stellung zu verstellen.

5. Vorrichtung nach einem oder mehreren der vorherigen Ansprüche, dadurch gekennzeichnet, daß der dem Zylinderraum am geschlossenen Ende des Zylinders (60) gegenüberliegende Druckraum über eine Leitung (84) an die Rücklaufleitung (78) angeschlossen ist, wobei diese Leitung (84) mit der Ausgangsleitung (82) verbunden ist und in dieser Verbindung (86) ein Rückschlagventil (88) derart vorgesehen ist, daß eine Flüssigkeitsverbindung nur von der Leitung (84) zur Ausgangsleitung (82) gestattet ist.

6. Vorrichtung nach einem oder mehreren der vorherigen Ansprüche, dadurch gekennzeichnet, daß der Zylinder (60) mit seiner Kolbenstange vertikal oberhalb der Schwenkverbindung an dem Deichselteil (28) angreift.

7. Vorrichtung nach einem oder mehreren der vorherigen Ansprüche, dadurch gekennzeichnet, daß mit dem Deichselteil (28) ein zweites Gerät (10) verriegelbar ist, das in der Arbeitsstellung neben dem ersten Gerät (12) und in der Transportstellung hinter dem ersten Gerät (12) läuft, wobei beide Geräte mit Laufrädern (18, 22) versehen sind.

## Claims

1. A device with a drawbar (54), a drawbar part (28) and a double-acting piston-cylinder (60) for connecting at least one implement (10, 12) to a towing vehicle having a towing device, wherein the drawbar (54) can be connected to the towing device at its front end and the towing vehicle is provided with at least two line connectors which are connected to or can be connected to a pressure source on the vehicle side and a reservoir on the vehicle side and which can be connected to the double-acting piston-cylinder (60) engaging at one end on the drawbar (54), wherein the drawbar (54) is vertically pivotally hinged at its rear end by means of a swivel connection on the drawbar part (28) which can be connected to the implement (10, 12), the double-acting cylinder (60) engages at its other end on the drawbar part (28), offset from the swivel connection, the cylinder (60) is so connected to the line connectors that a downwardly directed force is exerted on the towing device when the piston rod is extended, and the cylinder chamber at the closed end of the cylinder (60) can be connected to the line connector leading to the pressure source on the vehicle side through a connection, characterized in that the device further comprises a control valve (72) provided in this connection and designed to interrupt this connection, which closes on reaching a predetermined pressure which is lower than the system pressure on the vehicle side or the operating pressure of the pressure source on the vehicle side.

2. A device according to claim 1, characterized in that the predetermined pressure can be selectively adjusted.

3. A device according to claim 1 or 2, characterized in that the control valve (72) can be connected through an inlet line (74) to the line connector leading to the vehicle side pressure source and through a return flow line (78) to the line connector leading to the vehicle side reservoir and has an outlet line (82) which is connected to the cylinder chamber at the closed end of the cylinder (60).

4. A device according to claim 3, characterized in that the control valve (72) can assume a first position in which the input line (74) is connected to the outlet line (82), a second position in which the outlet line (82) is blocked and a third position in which the outlet line (82) is connected to the return flow line (78), wherein an adjustable spring (90) is provided and acts against the pilot pressure in the outlet line (82) and is biased to urge the control valve (72) into its first position.

5. A device according to one or more of the preceding claims, characterized in that the pressure chamber opposite the cylinder chamber at the closed end of the cylinder (60) is connected through a line (84) to the return flow line (78), while this line (84) is connected to the outlet line (82) and a check valve (88) is so arranged in this connection (86) that a fluid connection is only permitted from the line (84) to the outlet line (82).

6. A device according to one or more of the preceding claims, characterized in that the piston rod of the cylinder (60) engages vertically above the swivel connection on the drawbar part (28).

7. A device according to one or more of the preceding claims, characterized in that a second implement (10) can be latched to the drawbar part (28) and runs beside the first implement (12) in the working position and behind the first implement (12) in the transport position, both implements being provided with ground wheels (18, 22).

## Revendications

1. Dispositif comportant un timon (54), une partie de timon (28) et un vérin à double effet (60), pour relier au moins un appareil (10,12) à un véhicule tracteur, qui possède un dispositif de traction, et dans lequel le timon (54) peut être raccordé par son extrémité avant au dispositif de traction et le véhicule tracteur est équipé d'au moins deux raccords de canalisations, qui sont reliés ou peuvent être reliés à une source de pression, située dans le véhicule, et à un réservoir de collecte situé dans le véhicule et peuvent être raccordés au vérin (60) à double effet, qui est couplé par une extrémité au timon (54), et dans lequel le timon (54) est articulé par son extrémité arrière par l'intermédiaire d'une liaison pivotante, de manière à pouvoir pivoter verticalement, à la partie de timon (28) pouvant être reliée à l'appareil (10,12), le vérin à double effet (60) est couplé par son autre extrémité à la partie de timon (28), d'une manière décalée par rapport à la liaison pivotante, le vérin (60) est raccordé aux raccords de canalisations de telle sorte que, lors du déploiement de la tige de piston, une force dirigée vers le bas est appliquée au dispositif de traction, et la chambre située dans l'extrémité fermée du vérin (60) peut être reliée par l'intermédiaire d'une liaison au raccord de canalisation aboutissant à la source de pression située dans le véhicule, caractérisé en ce que le dispositif comporte en outre une soupape de commande (72) prévue dans cette liaison et agencée de manière à interrompre cette liaison et qui se ferme lorsqu'est atteinte une pression prédéterminée qui est inférieure à la pression du système présente dans le véhicule ou à la pression de fonctionnement de la source de pression située dans le véhicule.

2. Dispositif selon la revendication 1, caractérisé en ce que la pression pouvant être prédéterminée peut être réglée au choix.

3. Dispositif selon la revendication 1 ou 2, caractérisé en ce que la soupape de commande (72) peut être reliée par l'intermédiaire d'une canalisation d'entrée (74) au raccord de canalisation, qui aboutit à la source de pression située dans le véhicule, et par l'intermédiaire d'une canalisation de retour (78) au raccord de canalisation qui aboutit au réservoir de collecte situé dans le véhicule, et possède une canalisation de sortie (82) qui est raccordée à la chambre située dans l'extrémité fermée du vérin (60).

4. Dispositif selon la revendication 3, caractérisé en ce que la soupape de commande (72) peut prendre une première position, dans laquelle la canalisation d'entrée (64) est reliée à la canalisation de sortie (82), une seconde position, dans laquelle la canalisation de sortie (82) est bloquée, une troisième position dans laquelle la canalisation de sortie (82) est reliée à la canalisation de retour (78), et qu'il est prévu un ressort réglable (90), qui agit à l'encontre de la pression pilote dans la canalisation de sortie (82) et tend à amener la soupape de commande (72) dans sa première position.

5. Dispositif selon une ou plusieurs des revendications précédentes, caractérisé en ce que la chambre de pression, qui est située à l'opposé de la chambre située dans l'extrémité fermée du vérin (60), est raccordée par l'intermédiaire d'une canalisation (84) à la canalisation de retour (78), et que cette canalisation (84) est reliée à la canalisation de sortie (82) et qu'une soupape antiretour (88) est prévue dans cette liaison (86) de telle sorte qu'une liaison fluidique est possible uniquement depuis la canalisation (84) en direction de la canalisation de sortie (82).

6. Dispositif selon une ou plusieurs des revendications précédentes, caractérisé en ce que le vérin (60) est couplé par sa tige de piston, verticalement au-dessus de la liaison pivotante, à la partie de timon (28).

7. Dispositif selon une ou plusieurs des revendications précédentes, caractérisé en ce sur la partie de timon (28) peut être verrouillé un second appareil (10), qui, dans la position de travail, se déplace à côté du premier appareil (12) et, dans la position de transport, se déplace en arrière du premier appareil (12), les deux appareils étant équipés de roues (18,22).
